(19) Europäisches Patentamt
European Patent Office
Office européen des brevets

(11) **EP 2 899 869 A1**

(12) **EUROPEAN PATENT APPLICATION**

(43) Date of publication:
29.07.2015 Bulletin 2015/31

(51) Int Cl.:
*H02M 7/487* (2007.01)

(21) Application number: 15152206.7

(22) Date of filing: 22.01.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.01.2014 US 201414163649

(71) Applicant: General Electric Company
Schenectady, New York 12345 (US)

(72) Inventors:
• Harbourt, Cyrus David
Salem, VA Virginia 24153 (US)

• Ritter, Allen Michael
Salem, VA Virginia 24153 (US)
• Wagnoner, Robert Gregory
Salem, VA Virginia 24153 (US)

(74) Representative: Cleary, Fidelma
GPO Europe
GE International Inc.
The Ark
201 Talgarth Road
Hammersmith
London W6 8BJ (GB)

(54) **System and method of power conversion**

(57) Systems and methods for power conversion are disclosed. The systems and methods use generation of a plurality of power levels approximately equal to multiples of one or more power supply voltage levels along with generation of one or more intermediate power levels between levels of the plurality of power levels via spanning reactor inductors (70,72). Furthermore, the method includes generating an output signal using the generated plurality of power levels and the one or more intermediate levels.

FIG. 2

**Description**

BACKGROUND OF THE INVENTION

The subject matter disclosed herein relates to power converters.

Power converters may be used to create a variable frequency used to drive various electrical devices (e.g., AC motor) using a generated AC signal. Some driven electrical devices use high quality (e.g., high resolution) output waveforms from low, medium, or high voltages. The resolution of the AC signal may be determined by the number of levels that the power converter can produce. For example, power converters may produce AC signals with three or more available power levels (e.g., low, intermediate, high). Each additional power level adds greater resolution, but additional power levels may also increase complexity of the power converter.

BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system for converting power includes multiple power supplies coupled in series between a first rail and a second rail. The system also includes a first spanning reactor inductor coupled between the first rail and an output node. The first spanning reactor inductor is tied to a first voltage level via the first rail. Furthermore, the system also includes a second spanning reactor inductor coupled between the second rail and the output node. The second spanning reactor inductor is tied to a second voltage level via the second rail, and the first and second spanning reactor inductors utilize a circulating current to generate a third voltage level In a second embodiment, a system for converting power includes an output node and a first spanning reactor inductor coupled between the output node and a first voltage rail. The first spanning reactor inductor has a voltage level that is tied to a voltage level of the first rail. The system also includes a second spanning reactor inductor coupled between the output node and a second voltage rail. The second spanning reactor inductor has a voltage level tied to a voltage level of the second voltage rail. The first and second spanning reactor inductors split the voltage levels of the first and second voltage rail to generate an output voltage at the output node. The system also includes one or more modular signal generation units. Each modular generation unit includes a first power supply having a first anode and a first cathode and a second power supply having a second anode and a second cathode. The second anode is coupled to the first cathode. The modular signal generation unit also includes a first channel located at a first side of the first and second power supplies. Moreover, the first channel is configured to control the voltage level of the first rail and includes a first switch-diode pair parallel to the first power supply and a second switch-diode pair parallel to the second power supply. The modular signal generation unit also includes a second channel located at an opposite side of the first and second power supplies from the first channel. The second channel is configured to control the voltage level of the second rail and includes a third switch-diode pair parallel to the first power supply and a fourth switch-diode pair parallel to the second power supply.

In a third embodiment, method for converting power includes generating a plurality of power levels approximately equal to multiples of one or more power supply voltage levels. The method also includes generating one or more intermediate power levels between levels of the plurality of power levels via spanning reactor inductors. Furthermore, the method includes generating an output signal using the generated plurality of power levels and the one or more intermediate levels.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 is a perspective view of an embodiment of a electrical drive system having a power converter;

FIG. 2 is a schematic diagram of an embodiment of a signal generation portion of the power converter of FIG. 1;

FIG. 3 is a graphical view of an embodiment of an output signal of the signal generation portion of FIG. 2 having five levels of resolution;

FIG. 4 is a graphical view of an embodiment of an output signal of the signal generation portion of FIG. 2 having nine levels of resolution; and

FIG. 5 is a process for converting power using the power converter of FIG. 1.

DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

As will be discussed below, this disclosure relates to a power converter that includes a simple method of achieving high voltage, low distortion power converters. The power converters are capable of variable frequencies using a small footprint is available while providing a cheaper and smaller power generation system than is possible using magnetic components. Furthermore, the scalable nature of power generators of the power converters enable a variety of power levels to increase efficiency of power generation by reducing the amount of filtration used to filter the output signal to achieve a machine voltage. A closer match between the machine voltage and output signal reduces current divergence and reduces a switching rate frequency used thereby reducing switching loss and reducing the use of snubbers.

Also, due to the amount of power used in some power converters, power switches used in some power converters are used with higher voltage ratings (e.g., 3300V). However, in the signal generation portion discussed below, the spanning reactor inductors used in the power converters balance the DC link voltages and filter the voltage output to increase the number of DC link voltage levels without increasing voltage stress of the switches. By using switches with lower voltage ratings (e.g., up to 1700V), a power converter may be capable of conducting more current than a power converter using power switches with higher voltage ratings (e.g., 3300V or higher). Furthermore, the power converter may be manufactured more cheaply than a power converter using more expensive higher power switches (e.g., switches rated for 4500V or higher). Moreover, the power converter may be implemented without complicated transformers or additional switches thereby reducing complexity and costs for manufacture of the power converter. Furthermore, the power converter resolution may be modular through increasing the number of levels by stacking four-level modules or adding additional capacitor levels, thereby increasing flexibility of use of the power converter.

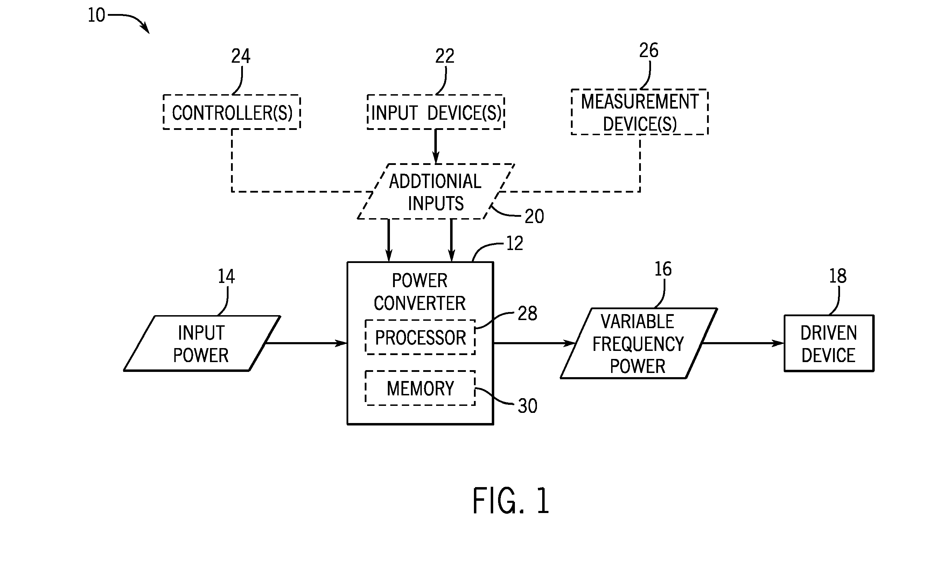

FIG. 1 illustrates a drive system 10 that includes a power converter 12 that receives an input power 14 and produces a variable frequency power 16 to drive a driven device 18 (e.g., such as an AC electric motor). In some embodiments, the power converter 12 may convert power from direct current (DC) to alternating current (AC). In other embodiments, the power converter 12 converts power from an input AC signal (e.g., input power 14) and produces a different AC signal output (e.g., variable frequency power 16). For example, the power converter 12 may convert the AC input signal to a desired variable frequency power 16 AC signal using a DC link.

In some embodiments, the power converter 12 may receive additional inputs 20 used to control or influence the conversion, such as selecting a desired waveform for the variable frequency power 16. In some embodiments, the additional inputs 20 may include user inputs received from input device(s) 22 such as a human machine interface (HMI) such as a keyboard, touch screen, mouse, or other suitable interface for receiving inputs from a user for controlling power conversion. Additionally or alternatively, some embodiments of the power converter 12 may receive additional inputs 20 from one or more controllers 24 outside the power converter 12, such as a controller 24 used to control an industrial automation system containing the driven device 18. Furthermore, in some embodiments, the power converter 12 may receive additional inputs 20 from one or more measurement device(s) 26. For example, in certain embodiments, the measurement devices 26 may measure operation of the driven device 18 and/or conditions that may affect the driven device 18.

In certain embodiments, the power converter 12 may include a processor 28 and memory 30. In such embodiments, the processor 28 may include a central processing unit of a computing device, an application-specific instruction-set processor (ASIC), a digital signal processor, or some other suitable processor, In certain embodiments, the processor 28 may be used to control switches in relation to various conditions (e.g., additional inputs 20) and in the operation manners discussed below. The memory 30 may include a non-transitory, computer-readable medium that stores instructions for use by the processor 28. In some embodiments, the memory 30 may be volatile (e.g., RAM, DRAM, SRAM) or non-volatile semi-conductor memory (e.g., ROM, EEPROM, etc.), tape, magnetic disks, optical discs (e.g., CD, DVD, etc.), or other non-transitory, computer-readable memory storage devices suitable for storing information for the power converter 12.

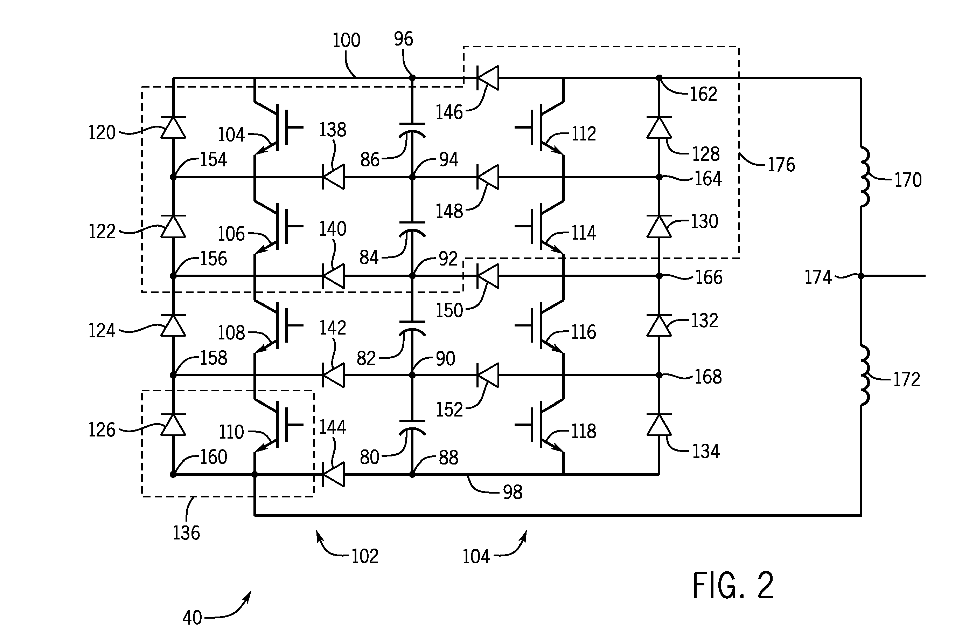

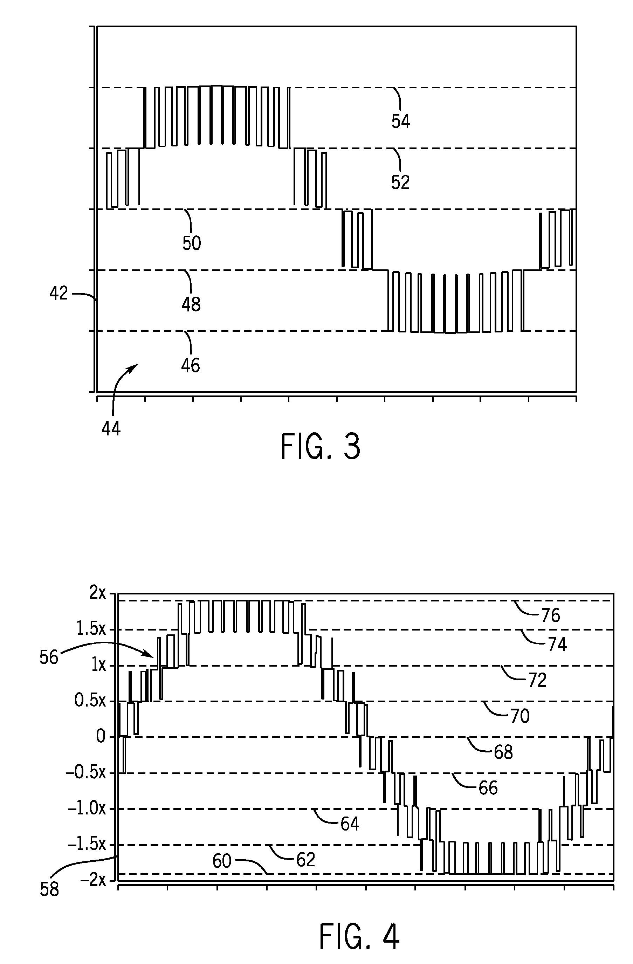

FIG. 2 illustrates a signal generation portion 40 of the power converter 12 that is capable of producing an AC signal having a five-level or nine-level resolution. For example, graph 42 of FIG. 3 illustrates a possible five-level AC signal 44 with five available power levels 46, 48, 50, 52, and 54, collectively referred to as power levels 46-54. As discussed below, in some embodiments where the voltage across each capacitor is approximately equal, the power levels 46-54 may approximately correspond to voltages between positive and negative voltages of double the voltage across each of the capacitors. In other words, power level 46 may be approximately equal to a negative voltage of two times the voltage across one capacitor. Similarly, power level 48 may be approximately equal to a negative voltage of one times the voltage across one capacitor. Power level 50 may correspond to a neutral voltage (e.g., ground). Likewise, the power level 52 may be approximately equal to a positive voltage of one times the voltage across one capacitor, and the power level 54 may be approximately equal to a positive voltage of two times the voltage across one capacitor. Power levels 46-54 to achieve five-level resolution that enables the creation of AC signal 44 that more closely emulates a sine wave than lower-resolution (e.g., two, three, or four-level signals). AC signals that more closely emulate a sine wave use less filtering to produce an AC signal that can be used by a driven device (e.g., driven device 18).

In addition to the five-level AC signal 44, the signal generation portion 40 may generate a nine-level AC signal, such as the AC signal 56 illustrated in graph 58 of FIG. 4 by using intermediate voltage levels to create voltage levels corresponding to half-step increments each corresponding to half a voltage across a capacitor. In some embodiments, the power levels 60, 62, 64, 66, 68, 70, 72, 74, and 76 each corresponds to an incremental step representing a change in voltage by one-half of a voltage difference across each capacitor. For example, if the voltage across each capacitor is X, power level 76 corresponds to approximately $2*X$ volts, power level 74 corresponds to approximately $1.5X$ volts, power level 72 corresponds to approximately X volts, power level 70 corresponds to approximately $X/2$ volts, and power level 68 corresponds to approximately 0V. Similarly, power level 66 corresponds to approximately negative $X/2$ volts, power level 64 corresponds to approximately negative X volts, power level 62 corresponds to approximately negative $1.5X$ volts, and power level 60 corresponds to negative $2*X$ volts.

Returning to FIG. 2, the signal generation portion 40 includes four DC link capacitors 80, 82, 84, and 86, collectively referred to as 80-86. Each of the capacitors 80-86 represents a voltage source between adjacent nodes of input voltage nodes 88, 90, 92, 94, and 96, collectively referred to as input voltage nodes 88-96. In other embodiments, the capacitors 80-86 may be dedicated power supplies, such as DC power supplies, batteries, or other sources capable of generating a voltage difference between respective adjacent nodes 88-96. As illustrated, the capacitors 80-86 are connected in series such that an anode of each capacitor couples to a cathode of an adjacent capacitor. Accordingly, a voltage potential of the sum of the voltages of the capacitors 80-86 exists between a lower rail 98 and an upper rail 100. The signal generation portion 40 also includes a left portion 102 and the right portion 104.

The signal generation portion 40 includes eight power switches 104, 106, 108, 110, 112, 114, 116, and 118, collectively referred to as power switches 104-118. In some embodiments, one or more of the power switches 104-118 may be insulated-gate bipolar transistors (IGBT), field-effect transistors (FET), or other transistor types suitable for converting alternating connections between the capacitors 80-86 and the lower rail 98 and/or the upper rail. In certain embodiments, one or more of the power switches 104-118 may be a suitable thyristor, such as a gateturn off thyristor (GTO) or an integrated gate-commutated thyristor (IGCT). The signal generation portion 40 also includes anti-parallel diodes 120, 122, 124, 126, 128, 130, 132, and 134, collectively referenced as diodes 120-134 each connected in anti-parallel to a respective power switch 104-118 in a switch-diode pair, such as the switch-diode pair 136. Each diode 120-134 acts as a clamping diode. In other words, the diodes 120-134 may reduce/eliminate a sudden voltage spike when one or more of the power switches 104-118 are toggled. The left portion 102 includes four switch-diode pairs (e.g., switch-diode pair 136) coupled in series between the lower rail 98 and the upper rail 96. Similarly, the right portion 104 includes four other switch-diode pairs coupled in series between the lower rail 98 and the upper rail 96.

The signal generation portion 40 also includes interconnection diodes 138, 140, 142, 144, 146, 148, 150, and 152, collectively referred to as diodes 138-152. Each interconnection diode 138-152 couples an anode and/or cathode of the capacitors 80-86 to one or more switch-diode pairs. For example, the diode 138 couples the switches 104 and 106 and the diodes 120 and 122 to the anode of capacitor 86 and the cathode of capacitor 84 via node 154. Similarly, the diode 140 couples the switches 106 and 108 and the diodes 122 and 124 to the anode of capacitor 84 and the cathode of the capacitor 82 via node 156. Likewise, the diode the 142 couples the switches 108 and 110 and the diodes 124 and 126 to the anode of capacitor 82 and the cathode of capacitor 84 via node 158. Moreover, the diode 144 couples the switch 110 and the diode 126 to the anode of capacitor 80 via the node 160 using the lower rail 98. In the right portion 104, the diode 146 couples the switch 112 and the diode 128 to the cathode of the capacitor 86 via node 162 using the upper rail 100. Similarly, the diode 148 couples the switches 112 and 114 and the diodes 128 and 130 to the cathode of the capacitor 84 and the anode of the capacitor 86. The diode 150 couples the switches 114 and 116 and the diodes 130 and 132 to the cathode of the capacitor 82 and the anode of capacitor 84, and the diode 152 couples the switches 116 and 118 and the diodes 132 and 134 to the anode of the capacitor 82 and the cathode of the capacitor 80 via node 168.

In some embodiments, as discussed below, the diodes 138-152 may have different voltage ratings. For example, in some embodiments, diodes located closer in proximity to the upper rail 100 have a higher voltage rating than diodes located closer in proximity to the lower rail 98. For example, in certain embodiments with the capacitors 80-86 having a voltage capacity of 1000V, diodes 144 and 152 may have voltage ratings of greater than 1000V (e.g., 1700V) while diodes 142 and 150 have voltage ratings of greater than 2000V (e.g., 3400V) and diodes 140 and 148 have voltage ratings of greater than 3000V (e.g., 5100V) and diodes 138 and 146 have voltage ratings of greater than 4000V (e.g., 6800V). In some embodiments, one or more of the diodes may include diodes having lower voltage ratings coupled in series. For example, in some embodiments, a single diode type (e.g., having a voltage rating of 1700V) may be used for various voltage ratings by placing multiples of the diodes in series (e.g., two in series for 3400V, three in series for 5100V, four in series for 6800V, etc.).

The signal generation portion 40 also includes an upper spanning reactor inductor 170 and a lower spanning reactor inductor 172. The upper spanning reactor inductor 170 is connected between an output node 174 and the upper rail 100. Similarly, the lower spanning reactor inductor 172 connected between the output node 174 and the lower rail 98. These spanning reactor inductors 156 and 158 cause a circulating current to split voltage between the spanning reactor inductors 156 and 158 to enable the signal generation portion 40 to generate nine levels of resolution by outputting voltages at a half of a voltage across each capacitor 80-86.

Using the switches 104-118 and/or the spanning reactor inductors 170 and 172, the signal generation portion 40 may operate using a nine-level operation mode or a five level operation mode. During five-level operation the switches may be operated (e.g., using the processor 28) to produce a five-level AC signal, such as AC signal 44 of FIG. 3. For example, to generate the voltage level 54, switches 104, 106, 108, and 110 are activated while switches 112, 114, 116, and 118 are inactive. Similarly, to generate the voltage level 52, switches 106, 108, 110, and 112 are activated while switches 104, 114, 116, and 118 are inactive. Moreover, to generate the voltage level 50, switches 108, 110, 112, and 114 are activated while switches 104, 106, 116, and 118 are inactive. To generate the voltage level 48 switches 110, 112, 113, and 116, are activated while switches 104, 106, 108, and 118 are deactivated. To generate the voltage level 46, switches 112, 114, 116, and 118 are activated while switches 104, 106, 108, and 110 are off. Accordingly, using a combination of the voltage levels 46-54, the signal generation portion 40 may generate an AC signal such as the AC signal 44. In such embodiments, the upper and lower spanning reactor inductors 170 and 172 are tied to approximately equal voltages thereby generating a voltage at the output node 174 approximately equal to the voltage exposed to each spanning reactor inductor 170 and 172.

If additional resolution is desired, half step intervals may be used (e.g., the voltage levels 74, 70, 66, and 62 of FIG. 4). To achieve such intervals, the spanning reactor inductors 170 and 172 may be driven to split voltages between the spanning reactor inductors 170 and 172. For example, to achieve the voltage 74 of 1.5X volts, switches 104, 106, 108, 110, and 112 may be activated while switches 114, 116, 118, and 120 are off. The activation of switches 104, 106, 108, and 100 ties the lower spanning reactor inductor 172 to a voltage of 2X volts via the lower rail 98, where X is the voltage across each of the capacitors in volts. The activation of switch 112 ties the upper spanning reactor inductor 170 to a voltage of 1X volts via the upper rail 100. The spanning reactor inductors 170 and 172 share their voltages using a circulating current thereby causing a voltage at the output node 174 to be an average of the voltages of the inductors, such as 1.5X volts. Similarly, to achieve the voltage level 50 of 0.5X volts, the upper spanning reactor inductor 170 may be tied to a voltage of 0 volts and the lower spanning reactor inductor 172 to a voltage of 1X volts. In certain embodiments, the upper spanning reactor inductor 170 may be tied to 0 volts via the upper rail 100 by activating switches 112 and 114 while switches 116 and 118 are inactive, and the lower spanning reactor inductor 172 may be tied to 1X volts by activating switches 106, 108, and 110 while switch 104 remains inactive. The spanning reactor inductors 170 and 172 share their voltages using a circulating current thereby causing a voltage at the output node 174 to be an average of the voltages of the inductors at 0.5X volts. To achieve a voltage level 66 of -0.5X volts, the upper spanning reactor inductor 170 may be tied to a voltage of -1X while the lower spanning reactor inductor 172 may be tied to a voltage of 0 volts. In some embodiments, the upper spanning reactor inductor 170 is tied to -1X volts by activating switches 112, 114, and 116 while switch 118 remains inactive, and the lower spanning reactor inductor 170 is tied to 0 volts by activating switches 108 and 110 while switches 104 and 106 remain inactive. The spanning reactor inductors 170 and 172 share their voltages using a circulating current thereby causing a voltage at the output node 174 to be an average of the voltages of the inductors at - 0.5X volts. To achieve the voltage level 62 of -1.5X volts, the upper spanning reactor inductor 170 may be tied to a voltage of -2X volts while the lower spanning reactor inductor 172 may be tied to a voltage of -1X volts. In some embodiments, the upper spanning reactor inductor 170 may be tied to a voltage of -2X volts by activating switches 112, 114, 116, and 118, and the lower spanning reactor inductor 172 may be tied to a voltage of -1X volts by activating switch 110 while switches 104, 106, and 108 remain inactive. The spanning reactor inductors 170 and 172 share their voltages using a circulating current thereby causing a voltage at the output node 174 to be an average of the voltages of the inductors at -1.5X volts.

Although the foregoing discussion specifically discusses the creation of a nine-level AC signal 58 using four sources, some embodiments may use different numbers of power supplies and available levels by adding/subtracting two switch-diode pairs and diodes along with capacitors. For example, to modify the signal generation portion 40 to generate a five level signal using two capacitors, portion 176 may be removed, such that the diodes 120, 122, 128, 130, 138, 140, 146 and 148, the switches 104, 106, 112, and 114, and the capacitors 86 and 86 are removed. Instead, the capacitor 82 would couple to the node 96; the diode 124 and the switch 108 would couple to the upper rail 100; and the diode 150 would couple to the upper rail 100. To modify the signal generation portion to generate a thirteen level signal using six capacitors, another section may be added to the signal generation portion 40 that is similar to the portion 176 and inserted between the portion 176 and the upper rail 100. Thus, the signal generation portion 40 may be modular and be adjusted to a desired amount of power level resolution or a desired usage of power supplies (e.g., DC link capacitors). In other words, using the above-described system allows for the production of a variable frequency signal with a number of available power levels that is one more than twice the number of power supplies (e.g., batteries, capacitors, etc.) used. Accordingly, the number of available levels of resolution may be found using the following equation:

$$n_L = 2n_S + 1 \hspace{3cm} (\text{Equation 1})$$

, where $n_L$ is the number of available levels and $n_S$ is the number of sources used to generating the variable frequency signal.

Returning to FIG. 2, in some embodiments, the signal generation portion 40 may balance voltages between the capacitors 80-86. In certain embodiments, the capacitors 80-86 may be recharged using various routing patterns for some voltage levels. For example, when the power level 62 is produced while load current is leaving the AC node 174, two possible configurations may be deployed. Either switches 110-118 may be activated to achieve the power level 62 or the switches 112-116 may be activated to achieve the same power level 62. Accordingly, by shifting which capacitors 80-86 are supplying the voltage, voltages may be balanced between the capacitors. Similarly, while current is exiting the AC node 174, voltage level 64 may be achieved by using one of the following configurations: activating switches 108, 110, and 112-116; activating switches 110 and 112-116; or activating switches 112 and 114. Moreover, while current is exiting the AC node 174, voltage level 66 may be achieved by choosing one of the following configurations: activating switches 106-110 and 112-118; activating switches 108, 110, and 112-116; activating switches 110, 112, and 114; and activating switch 112. Likewise, while current is exiting the AC node 174, voltage level 68 may be achieved by choosing one of the following configurations: activating switches 104-118; activating switches 106-116; activating switches 108-114; activating switches 110 and 112; and activating no switches. Furthermore, while current is exiting the AC node 174, voltage level 70 may be achieved by choosing one of the following configurations: activating switches 104-116; activating switches 106-114; activating switches 108-112; and activating switch 110. To achieve voltage level 72 while current is exiting the AC node 174 one of the following configurations may be chosen: activating switches 104-114; activating switches 106-112; and activating switches 108 and 110. To achieve voltage level 74 while current is exiting the AC node 174 one of the following configurations may be chosen: activating switches 104-112; and activating switches 106-110. Voltage levels 60 and 76 may be achieved using the configurations discussed above.

When load current is entering the AC node 174 the configurations produce opposite polarity voltage levels. For example, if current is entering the AC node 174, the configurations discussed above regarding voltage level 62 would instead produce voltage level 74. In other words, each voltage level has an opposite polarity voltage level that is produced when the current is exiting/entering the AC node 174. Furthermore, in some embodiments, when a circulating current is discontinuous the voltage levels 62, 66, 70, and 74 may not be produced regardless of load current direction. Additionally, when the circulation current is discontinuous, voltage levels may be achieved using only one side of the signal generation portion. For example, when load current is exiting the AC node 174, voltage level 60 may be achieved by activating no switches, voltage level 64 by activating switch 110, voltage level 68 by activating switches 108 and 110, voltage level 72 by activating switches 106-110, and voltage level 76 by activating switches 104-110. Likewise, when load current is entering the AC node 174, voltage level 60 may be achieve by activating switches 112-118, voltage level 64 by activating switches 112-116, voltage level 68 by activating switches 112 and 114, voltage level 72 by activating switch 112, and voltage level 76 by activating no switches. If the load current is indeterminate and the circulating current is discontinuous, the voltage level 60 may be achieved by activating switches 112-118, voltage level 64 by activating switches 110-116, voltage level 68 by activating switches 108-112, voltage level 72 by activating switches 106-112, and voltage level 76 by activating switches switches 104-110.

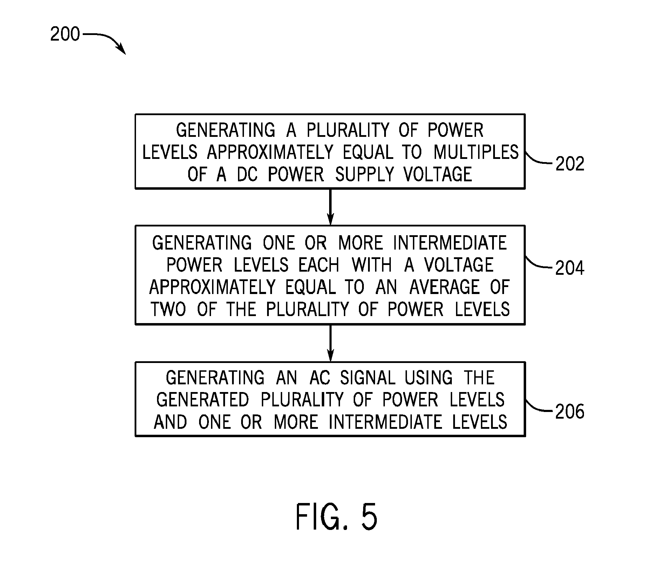

FIG. 5 is a flow chart diagram view of a process 200 for providing a variable frequency signal from DC power supplies, such as the signal generation portion 40. The process 200 includes generating a plurality of power levels approximate equal to multiples of a DC power supply voltage (block 202), where the DC power supply voltage is a voltage that occurs across each power supply of the system used to generate the variable frequency signal. For example, if the power supplies of the system each generates a voltage X, in certain embodiments, the plurality of power levels may include 0, 1X, 2X, 3X, or more volts (of any polarity). The process 200 also includes generating one or more intermediate power levels each with a voltage approximately equal to an average of two of the plurality of power levels (block 204) using spanning reactor inductors that generate a circulating voltage within the signal generation portion 40 to average the voltages tied to each spanning reactor inductor to generate an output voltage therebetween. For example, if the plurality of power levels included a voltage level at 1X volts and a voltage level at 2X volts, the one or more intermediate power levels may include. The process 200 also includes using the plurality of power levels and the one or more intermediate power levels to generate a variable frequency signal (e.g., the AC signal 58).

By using the above-described switching topology and method, a simple method of achieving high voltage, low distortion power converters capable of variable frequencies using a small footprint is available while providing a cheaper and smaller power generation system than is possible using magnetic components. Furthermore, the scalable nature of the power generation portion 40 enables a variety of power levels to increase efficiency of power generation by reducing the amount of filtration used to filter the output signal to achieve the machine voltage. A closer match between the machine voltage and output signal reduces current divergence and reduces a switching rate frequency used thereby reducing switching loss and reducing the use of snubbers.

Also, due to the amount of power used in some power converters, power switches are used with higher voltage ratings (e.g., 3300V). However, in the signal generation portion 40 discussed above, the spanning reactors balance the DC link voltages and filter the voltage output to increase the number of DC link voltage levels without increasing voltage stress of the switches. For example, the switches 104-110 and 112-118 (and their respective anti-parallel diodes) may generally undergo less voltage than is output. For example, in some embodiments, the switches 104-110 and 112-118 (and their respective anti-parallel diodes) may only be used to block voltages approximately equal to a voltage across a single capacitor. By reducing the amount of voltage that a switch blocks, a switch with a lower voltage rating (e.g., up to 1700V). By using switches with lower voltage ratings (e.g., up to 1700V), a power converter may be capable of conducting more current than a power converter using power switches with higher voltage ratings (e.g., 3300V or higher). Furthermore, the power converter may be manufactured more cheaply than a power converter using more expensive higher power switches (e.g., switches rated for 4500V or higher). Moreover, the power converter may be implemented without complicated transformers or additional switches thereby reducing complexity and costs for manufacture of the power converter. Furthermore, the power converter resolution may be somewhat modular increasing the number of levels by stacking four-level modules or adding additional capacitor levels, thereby increasing flexibility of use of the power converter.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A system for converting power comprising:

   a plurality of power supplies (80-86) coupled in series between a first rail (100) and a second rail (90);
   a first spanning reactor inductor (170) coupled between the first rail (100) and an output node (174), wherein the first spanning reactor inductor (170) is tied to a first voltage level via the first rail (100); and
   a second spanning reactor inductor (172) coupled between the second rail (90) and the output node (174), wherein the second spanning reactor inductor (172) is tied to a second voltage level via the second rail (90), wherein the first and second spanning reactor inductors (170,172) utilize a circulating current to generate a third voltage level.

2. The system of claim 1, comprising:

   a first portion comprising:

      a first plurality of switch-diode pairs (112-118,128-134) configured to couple the first rail (100) to the first voltage level (54); and
      a first plurality of interconnecting diodes (146-152) each coupling one or more of the first plurality of switch-diode pairs (112-118,128-134) to a respective power supply of the plurality of power supplies (80-86); and
      a second portion (102) comprising:

a second plurality of switch-diode pairs (104-110,120-152) configured to couple the second rail (90) to the second voltage level (52); and

a first plurality of interconnecting diodes (138-152) each coupling one or more of the first plurality of switch-diode pairs (104-110,120-126) to a respective power supply of the plurality of power supplies (80-86), wherein the first portion (102) and the second portion are substantially symmetrical about the plurality of power supplies (80-86).

3. The system of claim 1 or 2, wherein the first voltage level comprises a first multiple of a supply voltage provided by each of the plurality of power supplies 80-86), and the second voltage level comprises a second multiple of the supply voltage.

4. The system of claim 3, wherein the first voltage level is different than the second voltage level, wherein the third voltage level is between multiples of the supply voltage.

5. The system of claim 4, wherein the third voltage level comprises a non-integer multiple of the supply voltage.

6. The system of any preceding claim, wherein the third voltage level is an average of the first voltage and the second voltage.

7. The system of any of claims 2 to 6, wherein the first and second plurality of switch-diode pairs (112-118,128-134) comprise insulated-gate bipolar transistors (IGBTs), integrated gate-commutated thyristors (IGCTs), gate-turn off thyristors (GTOs) as a switch of each switch diode pair, or a combination thereof.

8. The system of any preceding claim, wherein the plurality of power supplies (80-86) each comprises capacitors, chemical batteries, or a combination thereof.

9. The system of claim 8, when dependent on claim 2, wherein each of the plurality of power supplies (80-86) each comprises DC link capacitors, wherein the first and second portions are configured to provide one or more configurations for each desired output voltage, wherein the one or more configurations for each desired output voltage allows capacitor balancing between the DC link capacitors (80-86) by varying which of the DC link capacitors are discharging or charging.

10. The system of any preceding claim, wherein the first and second spanning reactor inductors (170,172) are configured to generate an output signal with a number of available levels of resolution.

11. A method (200) for converting power comprising:

generating (202) a plurality of power levels (46-54,60-76) approximately equal to multiples of one or more power supply voltage levels;

generating (204) one or more intermediate power levels between levels of the plurality of power levels (46-54,60-76) via spanning reactor inductors (70,72); and

generating an output signal (58) using the generated plurality of power levels (46-54,60-76) and the one or more intermediate levels.

12. The method of claim 11, wherein generating the one or more intermediate power levels comprises inducing a circulating current using the spanning reactor inductors (70,72) to average two or more power levels of the plurality of power levels.

13. The method of claim 11 or 12, comprising driving an AC motor using the output signal.

FIG. 1

FIG. 2

FIG. 3

FIG. 4

200 ⟍

```
┌─────────────────────────────────────┐
│  GENERATING  A  PLURALITY  OF  POWER │
│  LEVELS  APPROXIMATELY  EQUAL  TO  MULTIPLES │──202
│  OF  A  DC  POWER  SUPPLY  VOLTAGE   │
└─────────────────────────────────────┘
                    │
                    ▼
┌─────────────────────────────────────┐
│  GENERATING  ONE  OR  MORE  INTERMEDIATE │
│  POWER  LEVELS  EACH  WITH  A  VOLTAGE │──204
│  APPROXIMATELY  EQUAL  TO  AN  AVERAGE  OF │
│  TWO  OF  THE  PLURALITY  OF  POWER  LEVELS │
└─────────────────────────────────────┘
                    │
                    ▼
┌─────────────────────────────────────┐
│  GENERATING  AN  AC  SIGNAL  USING  THE │
│  GENERATED  PLURALITY  OF  POWER  LEVELS │──206
│  AND  ONE  OR  MORE  INTERMEDIATE  LEVELS │
└─────────────────────────────────────┘
```

# FIG. 5

Europäisches
Patentamt

European
Patent Office

Office européen
des brevets

## EUROPEAN SEARCH REPORT

Application Number

EP 15 15 2206

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 044839 A (TOKYO INST TECH) 1 March 2012 (2012-03-01) * figures 2,3,4,5,10 * * claims 1,2 * * paragraph [0088] - paragraph [0094] * * paragraph [0003] * ----- | 1,3-13 | INV. H02M7/487 |
| A | WO 2011/124260 A1 (AREVA T & D UK LTD [GB]; DAVIDSON COLIN CHARNOCK [GB]; TRAINER DAVID []) 13 October 2011 (2011-10-13) * figure 9b * ----- | 2 | |
| A | US 2006/044857 A1 (LEMAK THOMAS A [US]) 2 March 2006 (2006-03-02) * figure 2 * ----- | 1,11 | |

TECHNICAL FIELDS
SEARCHED      (IPC)

H02M

The present search report has been drawn up for all claims

| Place of search | Date of completion of the search | Examiner |
|---|---|---|
| Munich | 26 May 2015 | Despis, Enguerran |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    ...................................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 15 2206

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2015

| Patent document cited in search report | | Publication date | Patent family member(s) | | Publication date |
|---|---|---|---|---|---|
| JP 2012044839 | A | 01-03-2012 | NONE | | |
| WO 2011124260 | A1 | 13-10-2011 | EP | 2556586 A1 | 13-02-2013 |
| | | | EP | 2650999 A2 | 16-10-2013 |
| | | | WO | 2011124260 A1 | 13-10-2011 |
| US 2006044857 | A1 | 02-03-2006 | US | 2006044857 A1 | 02-03-2006 |
| | | | WO | 2006026217 A2 | 09-03-2006 |

EPO FORM P0459

For more details about this annex : see Official Journal of the European Patent Office, No. 12/82